## Europäisches Patentamt
## European Patent Office
## Office européen des brevets

(19)

(11) Numéro de publication: **0 220 642**
**B1**

(12)

# FASCICULE DE BREVET EUROPEEN

(45) Date de publication du fascicule du brevet: **04.04.90**

(51) Int. Cl.⁵: **B 60 C 9/00, D 01 F 2/28**

(21) Numéro de dépôt: **86114505.0**

(22) Date de dépôt: **20.10.86**

(54) **Enveloppe de pneumatique dont la carcasse est constituée par une fibre en cellulose régénérée.**

(30) Priorité: **24.10.85 FR 8516078**

(43) Date de publication de la demande:
**06.05.87 Bulletin 87/19**

(45) Mention de la délivrance du brevet:
**04.04.90 Bulletin 90/14**

(84) Etats contractants désignés:
**AT BE CH DE ES FR GB GR IT LI LU NL SE**

(56) Documents cités:
**EP-A-0 103 398**
**FR-A-2 340 344**
**US-A-2 053 123**
**US-A-2 147 736**

(73) Titulaire: **MICHELIN RECHERCHE ET TECHNIQUE**
**Schützenmattstrasse 77 B.P. 96**
**CH-4051 Basel (CH)**

(72) Inventeur: **Gouttebessis, Jacques**
**24, route d'Egaules Chanat-la-Mouteyre**
**F-63530 Volvic (FR)**
Inventeur: **Villaine, Philippe**
**Raubbühlstrasse, 5a**
**CH-8600 Dübendorf (CH)**

(74) Mandataire: **Doussaint, Jean-Marie**
**MICHELIN & CIE Service K. Brevets**
**F-63040 Clermont-Ferrand Cedex (FR)**

Courier Press, Leamington Spa, England.

EP 0 220 642 B1

# EP 0 220 642 B1

**Description**

L'invention concerne les enveloppes de pneumatiques et plus particulièrement les carcasses d'enveloppes de pneumatiques réalisées avec des fibres cellulosiques.

Le document EP—A—0179822 (correspondant à la demande de brevet PCT/CH 85/00065 déposée par la demanderesse) décrit une fibre en cellulose régénérée, cette fibre étant constituée par un ou plusieurs filaments à base de cellulose et/ou d'au moins un dérivé cellulosique comportant des groupes ester de la cellulose, au moins une partie de ces groupes ester étant des groupes formiate, cette fibre ayant les propriétés suivants:

a) le degré de substitution DS de la cellulose en groupes formiate est nul ou inférieur à 2% et le degré de polymérisation DP de la cellulose est supérieur à 150 et inférieur à 1500;

b) le degré de polymérisation DP de la cellulose, la ténacité T et le module initial Mi de la fibre vérifient les relations suivantes, T et Mi étant exprimés en cN/tex:

$$\text{pour} \quad DP<200, \text{ on a } T>20 \text{ et } Mi>1800;$$
$$\text{pour } 200 \leqslant DP<300, \text{ on a } T>30 \text{ et } Mi>2000;$$
$$\text{pour } 300 \leqslant DP<400, \text{ on a } T>40 \text{ et } Mi>2400;$$
$$\text{pour } 400 \leqslant DP<1500, \text{ on a } T>60 \text{ et } Mi>2600;$$

c) chaque filament présente une morphologie telle qu'il est constitué au moins en partie par des couches emboîtées les unes dans les autres, ces couches entourant l'axe du filament, et telle que dans chaque couche la direction optique et la direction de cristallisation varient de façon pseudopériodique le long de l'axe du filament. Une telle fibre fait alors partie de l'état de la technique selon l'Art. 54(3) CBE.

Cette fibre en cellulose régénérée est obtenue de la façon suivante:

On prépare une solution anisotrope à base d'au moins un dérivé cellulosique comportant des groupes ester de la cellulose, au moins une partie de ces groupes ester étant des groupes formiate, la concentration du dérivé cellulosique ou de l'ensemble des dérivés cellulosiques dans la solution étant au moins égale à 10,2% en poids, le degré de polymérisation DP de la cellulose dans le ou les dérivés cellulosiques étant supérieur à 150 et inférieur à 1500; cette solution est par exemple préparée par dissolution directe de la cellulose à l'aide de l'acide formique et de l'acide orthophosphorique;

On transforme cette solution pour obtenir une fibre, par exemple par la technique dite "avec espace d'air" (dry jet-wet);

On régénère la cellulose de cette fibre de telle sorte que le degré de substitution DS de la cellulose en groupes formiate soit nul ou inférieur à 2%.

Cette fibre se caractérise par une ténacité T et un module initial Mi élevés.

La demanderesse à découvert que l'emploi de cette fibre en cellulose régénérée pour réaliser une carcasse de pneumatique permet, de façon inattendue, de diminuer la résistance au roulement de l'enveloppe de pneumatique.

En conséquence, l'invention concerne une enveloppe de pneumatique comportant au moins une nappe carcasse, cette enveloppe étant caractérisée en ce que cette nappe carcasse est constituée au moins en partie par une fibre en cellulose régénérée, cette fibre étant constituée par ou un plusieurs filaments à base de cellulose et/ou d'au moins un dérivé cellulosique comportant des groupes ester de la cellulose, au moins une partie de ces groupes ester étant des groupes formiate, cette fibre ayant les propriétiés suivants:

a) le degré de substitution DS de la cellulose en groupes formiate est nul ou inférieur à 2% et le degré de polymérisation DP de la cellulose est supérieur à 150 et inférieur à 1500;

b) le degré de polymérisation DP de la cellulose, la ténacité T et le module initial Mi de la fibre vérifient les relations suivantes, T et Mi étant exprimés en cN/tex:

$$\text{pour} \quad DP<200, \text{ on a } T>20 \text{ et } Mi>1800;$$
$$\text{pour } 200 \leqslant DP<300, \text{ on a } T>30 \text{ et } Mi>2000;$$
$$\text{pour } 300 \leqslant DP<400, \text{ on a } T>40 \text{ et } Mi>2400;$$
$$\text{pour } 400 \leqslant DP<1500, \text{ on a } T>60 \text{ et } Mi>2600;$$

c) chaque filament présente une morphologie telle qu'il est constitué au moins en partie par des couches emboîtées les unes dans les autres, ces couches entourant l'axe du filament, et telle que dans chaque couche la direction optique et la direction de cristallisation varient de façon pseudopériodique le long de l'axe du filament.

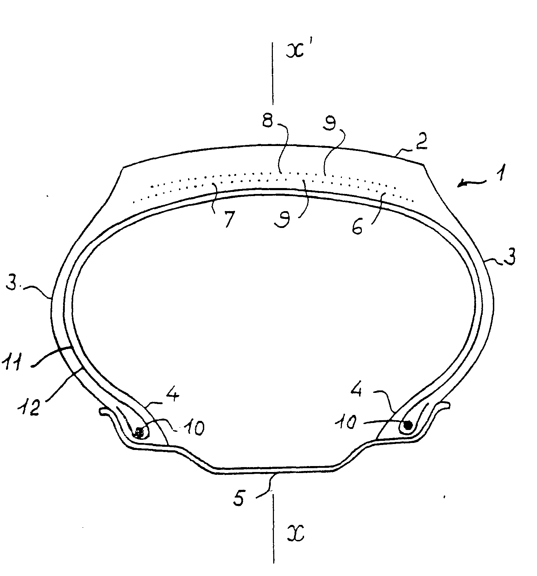

L'invention sera aisément comprise à l'aide des exemples non limitatifs qui suivent et de la figure unique schématique relative à ces exemples, cette figure unique représentant une coupe radiale d'une enveloppe de pneumatique avec une nappe carcasse qui peut être ou non conforme à l'invention.

On voit sur le dessin une enveloppe de pneumatique 1. Cette enveloppe 1 comporte un sommet 2, deux flancs 3 et deux bourrelets 4, l'enveloppe l'étant montée sur la jante 5. Le sommet 2 est renforcé par une armature 6 constituée par deux nappes superposées 7, 8, chacune de ces nappes comportant les fils de renfort 9. Chacun des bourrelets 4 est renforcé par une tringle 10. L'enveloppe 1 comporte une nappe carcasse il qui s'étend d'un bourrelet 4 à l'autre en s'enroulement autour de la tringle 10 de chacun de ces

2

# EP 0 220 642 B1

bourrelets 4 d'une façon connue en soi, cette carcasse étant radiale. La nappe 7 est située sous la nappe 8, entre cette nappe 8 et la carcasse 11.

A titre d'exemple, l'enveloppe de pneumatique 1 a les caractéristiques suivantes:

Dimension: 135×13; pour toutes les mesures géométriques qui suivent, cette enveloppe est montée sur la jante 5 et gonflée à sa pression normale d'utilisation 1,9 bar.

Armature 6: les nappes 7, 8 sont constituées chacune de câbles 9 en acier; chaque câble 9 comporte 4 fils d'acier de diamètre 0,23 mm, ces fils étant tordus ensemble avec un pas de 10 mm et frettés avec un pas de 3,5 cm; dans chaque nappe, les câbles 9 font un angle d'environ 20° avec le plan équatorial qui est référence par la ligne xx' sur le dessin, les nappes 7, 8 étant croisées, de façon connue, c'est-à-dire que les angles des nappes sont opposés; la largeur des nappes 7, 8 mesurée en section radiale le long de la nappe est respectivement d'environ 95 et 85 mm; le pas de pose des câbles 9 dans les nappes 7, 8 est de 1 mm.

Nappe carcasse 11: cette nappe est constituée par des assemblages 12 de fibres qui peuvent être soit conformes à l'invention, soit non conformes à l'invention. A titre d'exemple, dans tous les cas, chacun de ces assemblages 12 est un retors constitué par deux multifilaments qui sont préalablement tordus individuellement puis assemblés avec une torsion de même pas que la torsion préalable, mais de sens opposé. Il est à noter que les deux torsions opposées pourraient ne pas avoir le même pas.

D'autre part, dans tous les cas, le nombre de retors 12 dans la nappe 11 est de 11,9 par cm, cette distance étant mesurée dans le plan équatorial xx', les retors 12 ayant chacun une orientation radiale.

Deux types de retors 12 sont utilisés pour obtenir ainsi deux enveloppes 1: un retors de fibres conformes à l'invention référence 12A et un retors référence 12B constitué de fibres non conformes à l'invention en rayonne.

Les caractéristiques des retors 12A, 12B et des fibres constituant ces retors sont données le tableau 1 suivant:

TABLEAU 1

| Caractéristiques | Retors | |
| --- | --- | --- |
| | 12A | 12B |
| 1. Filaments | | |
| Titre (tex) | 0.18 | 0,19 |
| Ténacité (cN/tex) | 102 | 43,7 |
| Module initpal (cN/tex) | 3720 | 1110 |
| 2. Multifilaments non tordus | | |
| Nombre de filaments | 1000 | 1000 |
| Titre (tex) | 180 | 190 |
| Ténacité (cN/tex) | 94 | 41.7 |
| Module initial (cN/tex) | 2690 | 766 |
| 3. Torsion préalable des multifilaments (t/m) | 360 S | 360 S |
| 4. Torsion des retors (t/m) | 360 Z | 360 Z |

Remarques sur tableau 1: toutes les caractéristiques données tant pour le retors 12A que pour le retors 12B sont déterminées selon les méthodes décrites dans la demande précitée PCT/CH85/00065.

Torsion

Pour les multifilaments et les retors, la torsion est exprimée en nombre de tours par mère (t/m). La lettre S ou Z qui suit la valeur de la torsion est couramment utilisée dans l'industrie textile, et signifie que la torsion est effectuée dans le sens de cette lettre, les torsions Z étant bien sûr de sens opposé aux torsions S.

Les multifilaments utilisés pour réaliser le retors 12A sont préparés de la façon suivante, conformément à la demande de brevet précitée PCT/CH85/00065.

On réalise un mélange à partir des matières de base suivantes:

Matière (I): matière cellulosique contenant 98,8% en poids d'holocellulose (96% en poids d'$\alpha$-cellulose et 2,8% en poids d'hémicelluloses);

Matière (II): acide formique conforme au tableau 3, produit 1, de la demande précitée PCT/CH85/00065.

Matière (III): acide orthophosphorique conforme au tableau 3, produit 2, de la demande précité PCT/CH85/00065.

Lors de la réalisation du mélange, on a les relations:

$$R_I=16,00; \quad R_{II}=18,79; \quad R_{III}=64,45; \quad R_{er}=R_e=0,76,$$

la signification de $R_I$, $R_{II}$, $R_{III}$, $R_{er}$, $R_e$ étant donnée dans la demande PCT/CH85/00065 précitée.

3

Au bout de 90 minutes dans un malaxeur thermostaté muni d'un agitateur à ancre et travaillant sous vide, on obtient une solution dont la constitution est la suivante: dérive cellulosique (formiate de cellulose): 19,05% en poids; acide organique (acide formique): 13,79% en poids, acide minéral (acide orthophosphorique): 64,45% en poids; eau: 2,71% en poids. La solution est anisotrope.

A partir du réacteur de mise en solution, on introduit directement la solution dans la pompe de filature.

A partir de la pompe, on extrude la solution à travers une filière comportant 200 orifices ayant chacun un diamètre de 0,005 cm. La filière est située à 0,8 cm du bain de coagulation qui est de l'acétone à −15°C. Sur le dispositif d'entraînement, la fibre a une vitesse de 54 m/min ce qui correspond à un FEF (facteur d'étirage au filage) de 3,6. La bobine obtenue est lavée dans l'eau. On obtient ainsi une fibre (filé) constituée par 200 filaments continus.

On assemble ensuite 5 filés ainsi obtenus à l'entrée d'un poste de régénération. Dans ce poste, le nouveau multifilament est régénéré en continu pendant 15 s à l'aide d'une solution aqueuse contenant 1% en poids d'hydroxyde de sodium. Le multifilament régénéré passe ensuite dans une cabine de lavage neutre où il est lavé pendant 25 s à l'eau. Finalement, le multifilament passe pendant 10 s sur des tambours chauffés à 150°C pour être séché, avant d'être bobiné. On obtient ainsi un multifilament régénéré constitué par 1000 filaments, la fibre étant constituée par ce multifilament.

Cette fibre régénérée est caractérisée par un degré de polymérisation DP égal à 410 et par un degré de substitution DS inférieur à 0,5%, DP et DS étant déterminés conformément à la demande de brevet précitée PCT/CH85/00065. La morphologie de cette fibre est la même que la morphologie des fibres conformes à l'invention décrite dans la demande de brevet précitée PCT/CH85/00065, cette morphologie étant donc telle que chaque filament de cette fibre régénérée est constitué au moins en partie par des couches emboîtées les unes dans les autres, ces couches entourant l'axe du filament, et telle que dans chaque couche la direction optique et la direction de cristallisation varient de façon pseudopériodique le long de l'axe du filament. Les propriétés mécaniques de la fibre et des filaments qui la constituent sont données dans le tableau 1 précédent.

Pour chaque des deux enveloppes 1, la résistance au roulement est déterminée de la façon suivante.

L'enveloppe 1, montée sur sa jante 5, gonflée à sa pression normale d'utilisation et chargée de sa charge normale d'utilisation est entraînée librement en rotation par un volant. Les conditions de cette mesure sont les suivantes:

température normale (environ 20°C);

vitesse de roulage 60 km/h, après stabilisation thermique;

circonférence du volant: 8,50 m;

pression de gonflage de l'enveloppe 1,9 bar;

charge de l'enveloppe 280 décanewtons.

La résistance au roulement X de l'enveloppe 1 correspond à l'effort au roulement dans l'aire de contact de l'enveloppe 1 avec le volant.

La résistance au roulement X est calculée par la formule:

$$X = F \times \frac{R + R_c}{R}$$

F étant l'effort mesuré sur l'axe de la roue qui comporte la jante 5, R étant le rayon du volant, $R_c$ étant le rayon écrasé de l'enveloppe 1 sur le volant.

L'indice de résistance au roulement $I_r$ est donné par la formule: $I_r = X/Z$, Z étant la charge de l'enveloppe (280 décanewtons).

L'indice de résistance au roulement $I_r$, est donné dans la tableau 2 suivant, $I_r$ étant exprimé en décanewtons par tonne (daN/t).

TABLEAU 2

| Indice de résistance au roulement $I_r$ (daN/t) | Retors utilisé pour l'enveloppe | |
|---|---|---|
| | 12A | 12B |
| | 13,02 | 13,33 |

On constate donc de façon inattendue que, par rapport à une carcasse en rayonne, la carcasse conforme à l'invention utilisant le retors 12A conduit à une résistance au roulement plus faible ce qui permet de diminuer l'énergie necessaire au roulage et de diminuer l'échauffement de l'enveloppe 1, donc d'augmenter sa durée de vie.

Toutes les caractéristiques de fibres régénérées conformes à l'invention décrites dans la demande de brevet précitée PCT/CH85/00065 peuvent être utilisées dans l'invention correspondant à la présente demande.

4

On peut avoir par exemple les caractéristiques suivantes pour les fibres:
Le module sonique Ms vérifie la relation

$$Ms>3000 \text{ cN/tex.}$$

En particulier le module sonique de la fibre utilisée pour réaliser le retors 12A est de 3610 cN/tex.
L'indice d'orientation 1.0 vérifie la relation suivante:

$$I.O>95,5\%.$$

En particulier l'indice d'orientation I.O de la fibre utilisée pour réaliser le retors 12A est de 97,4%.
La fibre est dépourvue d'étirage autre que celui résultant de sa mise en forme.
Le degré de polymérisation DP de la cellulose est au moins égal à 200 et au plus égal à 1200.
Bien entendu, l'invention n'est pas limitée aux exemples de réalisation précédemment décrits, c'est ainsi par exemple que l'enveloppe de pneumatique conforme à l'invention peut comporter plus d'une nappe carcasse.

**Revendications**

1. Enveloppe de pneumatique comportant au moins une nappe carcasse, cette enveloppe étant caractérisée en ce que cette nappe carcasse est constituée au moins en partie par une fibre en cellulose régénérée, cette fibre étant constituée par un ou plusieurs filaments à base de cellulose et/ou d'au moins un dérivé cellulosique comportant des groupes ester de la cellulose, au moins une partie de ces groupes ester étant des groupes formiate, cette fibre ayant les propriétés suivantes:

a) la degré de substitution DS de la cellulose en groupes formiate est nul ou inférieur à 2% et le degrée de polymérisation DP de la cellulose est supérieur à 150 et inférieur à 1500;

b) le degré de polymérisation DP de la cellulose, la ténacité T et le module initial Mi de la fibre vérifient les relations suivantes, T et Mi étant exprimés en cN/tex:

$$\text{pour} \quad DP<200, \text{ on a } T>20 \text{ et } Mi>1800;$$
$$\text{pour } 200{\leqslant}DP<300, \text{ on a } T>30 \text{ et } Mi>2000;$$
$$\text{pour } 300{\leqslant}DP<400, \text{ on a } T>40 \text{ et } Mi>2400;$$
$$\text{pour } 400{\leqslant}DP<1500, \text{ on a } T>60 \text{ et } Mi>2600;$$

c) chaque filament présente une morphologie telle qu'il est constitué au moins en partie par des couches emboîtées les unes dans les autres, ces couches entourant l'axe du filament, et telle que dans chaque couche la direction optique et la direction de cristallisation varient de façon pseudopériodique le long de l'axe du filament.

2. Enveloppe de pneumatique selon la revendication 1 caractérisée en ce que le module sonique Ms de la fibre vérifie la relation: Ms>3000 cN/tex.

3. Enveloppe de pneumatique selon l'une quelconque des revendications 1 ou 2 caractérisée en ce que l'indice d'orientation I.O de la fibre vérifie la relation suivante: I.O>95.5%.

4. Enveloppe de pneumatique selon l'une quelconque des revendications 1 à 3 caractérisée en ce que la fibre est dépourvue d'étirage autre que celui résultant de sa mise en forme.

5. Enveloppe de pneumatique selon l'une quelconque des revendications 1 à 4 caractérisée en ce que, dans la fibre, le degré de polymérisation DP de la cellulose est au moins égal à 200 et au plus égal à 1200.

6. Enveloppe de pneumatique selon l'une quelconque des revendications 1 à 5 caractérisée en ce que la nappe carcasse est une nappe radiale.

**Patentansprüche**

1. Luftreifenhülle, die zumindest eine Karkassenlage aufweist, dadurch gekennzeichnet, daß diese Karkassenlage zumindest zum Teil aus einer Faser aus regenerierten Zellulose besteht, wobei diese Faser aus einem oder mehreren Filamenten auf der Basis von Zellulose und/oder zumindest einem Zellulosederivat, welches Zelluloseestergruppen aufweist, wobei zumindest ein Teil dieser Estergruppen Formiatgruppen sind, besteht, und wobei diese Faser die folgenden Eigenschaften aufweist:

a) der Substitutionsgrad DS der in Formiatgruppen vorliegenden Zellulose ist Null oder kleiner als 2% und der Polymerisationsgrad DP der Zellulose liegt über 150 und unter 1500;

b) der Polymerisationsgrad DP der Zellulose, die Zugfestigkeit T und der Ausgangselastizitätsmodul Mi der Faser erfüllen die folgenden Beziehungen, T und Mi sind in cN/tex angegeben:

$$\text{für} \quad DP<200, \text{ ist } T>20 \text{ und } Mi>1800;$$
$$\text{für } 200{\leqslant}DP<300, \text{ ist } T>30 \text{ und } Mi>2000;$$
$$\text{für } 300{\leqslant}DP>400, \text{ ist } T>40 \text{ und } Mi>2400;$$
$$\text{für } 400{\leqslant}DP<1500, \text{ ist } T>60 \text{ und } Mi>2600;$$

c) jedes Filament weist eine Morphologie auf, bei der es zumindest zum Teil aus Schichten besteht, die ineinander verschachtelt sind, diese Schichten umhüllen die Filamentachse und in jeder dieser Schichten verändert sich die optische Richtung und die Kristallisationsrichtung entlang der Filamentachse pseudoperiodisch.

2. Luftreifenhülle nach Anspruch 1, dadurch gekennzeichnet, daß der Sonarmodul Ms der Faser die Bedingung Ms>3000 cN/tex erfüllt.

3 Luftreifenhülle nach einem der Ansprüche 1 oder 2, dadurch gekennzeichnet, daß der Orientations-index I.O der Faser die Bedingung I.O>95,5% erfüllt.

4. Luftreifenhülle nach einem der Ansprüche 1 bis 3, dadurch gekennzeichnet, daß die Faser keinerlei Strekung, außer der, die von ihrer Formgebung herrührt, unterworfen ist.

5. Luftreifenhülle nach einem der Ansprüche 1 bis 4, dadurch gekennzeichnet, daß in der Faser der Polymerisationsgrad DP der Zellulose zumindest gleich 200 und höchstens gleich 1200 ist.

6. Luftreifenhülle nach einem der Ansprüche 1 bis 5, dadurch gekennzeichnet, daß die Karkassenlage eine Radiallage ist.

## Claims

1. A pneumatic tyre comprising at least one carcass ply, said tyre being characterized by the fact that said carcass ply is formed, at least in part, of a regenerated cellulose fiber, said fiber being formed of at least one filament having a base of cellulose and/or of at least one cellulose derivative containing cellulose ester groups, at least a part of these ester groups being formate groups, said fiber having the following properties:

(a) the degree of substitution DS of the cellulose by formate groups is zero or less than 2% and the degree of polymerization DP of the cellulose is greater than 150 and less than 1500;

(b) the degree of polymerization DP of the cellulose, the tenacity T and the initial modulus $M_i$ of the fiber verify the following relationships, T and $M_i$ being expressed in cN/tex:

$$\text{for} \quad DP<200: \quad T>20 \text{ and } M_i>1800;$$
$$\text{for } 200{\leq}DP<300: \quad T>30 \text{ and } M_i>2000;$$
$$\text{for } 300{\leq}DP<400: \quad T>40 \text{ and } M_i>2400;$$
$$\text{for } 400{\leq}DP<1500: \quad T>60 \text{ and } M_i>2600;$$

(c) each filament has a morphology such that it is formed, at least in part, by layers which are embedded in each other, these layers surrounding the axis of the filament, and such that in each layer the optical direction and the direciton of crystallization vary pseudoperiodically along the axis of the filament.

2. A pneumatique tyre according to Claim 1, characterized by the fact that the sonic modulus $M_s$ of the fiber verifies the relationship $M_s>3000$ cN/tex.

3. A pneumatic tyre according to anyone of Claims 1 or 2 characterized by the fact that the index of orientation I.O. of the fiber verifies the relationship I.O.>95.5%.

4. A pneumatic tyre according to anyone of Claims 1 to 3 characterized by the fact that the fiber is without drawing, other than that resulting from its shaping.

5. A pneumatic tyre according to anyone of Claims 1 to 4 characterized by the fact that in the fiber the degree of polymerization DP of the cellulose is at least equal to 200 and at most equal to 1200.

6. A pneumatic tyre according to anyone of Claims 1 to 5, characterized by the fact that the carcass ply is a radial ply.

EP 0 220 642 B1

1